# EUROPEAN PATENT APPLICATION

(11) **EP 4 737 744 A1**
(43) Date of publication of application: **06.05.2026**
(21) Application number: 25209392.7
(22) Date of filing: 17.10.2025
(51) Int. Cl.: F16B 5/02, D06F 39/12, D06F 58/20, F16B 37/04

(54) **HOUSEHOLD APPLIANCE AND ASSEMBLY METHOD THEREOF**

(30) Priority: 31.10.2024 CN 202411546752
(71) Applicant: BSH Hausgeräte GmbH, 81739 München (DE)
(72) Inventor: Wang, Jin, Nanjing, 210046 (CN); Sun, Ye, Nanjing, 210046 (CN); Lu, Jin, Nanjing, 210046 (CN)

(57) **Abstract**

Embodiments of the present invention relate to a household appliance (10, 10'), including: an attachment member (12, 12'), having a first connecting hole (14, 14'); an appliance main body (16, 16'), including a second connecting hole (18, 18') corresponding to the first connecting hole (14, 14'); an adapter (20, 20'), having a third connecting hole (22, 22') corresponding to the first connecting hole (14, 14') and the second connecting hole (18, 18'); and a connecting member (24, 24'), fitting the first connecting hole (14, 14'), the second connecting hole (18, 18'), and the third connecting hole (22, 22'), to fixedly connect the attachment member (12, 12') to the appliance main body (16, 16'). The embodiments of the present invention further relate to an assembly method (100, 200) for the household appliance (10, 10'). According to the embodiments of the present invention, the household appliance (10, 10') can have a strong structure and low operating noise, user experience can be good, and the like.

## Description

### TECHNICAL FIELD

This application relates to the field of household appliance technologies, and in particular, to a household appliance and an assembly method thereof.

### BACKGROUND

In consideration of aspects such as implementing various functions reliably and having a beautiful appearance, a household appliance such as a laundry treatment apparatus usually has an appliance main body such as a case body, and an attachment member that is mounted in the appliance main body, such as a front plate.

There is room for improvement in some existing household appliances. For example, during logistics transportation, an assembly connection between an attachment member of some laundry treatment apparatuses such as a washing machine, a washer-dryer combo, and a clothes dryer and an appliance main body is easily loosened due to a transport condition such as a drop and/or shake, thus causing noise in a case such as high-rotation speed dehydration, and further, user experience of the household appliance is to be improved.

Therefore, an improved household appliance and an assembly method thereof are needed.

### SUMMARY

An objective of this application is to provide an improved household appliance and an assembly method thereof.

For the foregoing objective, an aspect of embodiments of this application relates to a household appliance, including: an attachment member, having a first connecting hole; an appliance main body, including a second connecting hole corresponding to the first connecting hole; an adapter, having a third connecting hole corresponding to the first connecting hole and the second connecting hole; and a connecting member, fitting the first connecting hole, the second connecting hole, and the third connecting hole, to fixedly connect the attachment member to the appliance main body.

According to the embodiments of the present invention, the household appliance can have a strong structure and low operating noise, user experience can be good, and the like. For example, in the embodiments of this application, the connecting member fits the first connecting hole, the second connecting hole, and the third connecting hole, to fixedly connect the attachment member to the appliance main body. By enhancing assembly connection strength at an assembly connection between the attachment member and the appliance main body by using the adapter, it may be beneficial to resolve a problem that it is difficult for strength of the appliance main body and/or the attachment member to ensure the assembly connection strength at the assembly connection, so that the structure of the household appliance is strong, and the assembly connection between the attachment member and the appliance main body is not easy to be loosened due to a transport condition such as a drop and/or shake during logistics transportation. It can be avoided that the household appliance generates related noise during operation, and the user experience of the household appliance is good. Moreover, the assembly connection between the attachment member and the appliance main body is easy and convenient, and excessive design changes do not need to be made to the appliance main body and/or the attachment member. As a whole, a process of the household appliance is easy, convenient to assemble, a cost is low, and the like.

In some embodiments, the first connecting hole, the second connecting hole, and the third connecting hole are sequentially arranged in a front-rear direction. In this way, it may be helpful for the adapter to enhance the assembly connection between the attachment member and the appliance main body on a rear side that does not easily affect an appearance of the household appliance.

In some embodiments, the first connecting hole, the second connecting hole, and the third connecting hole are in communication with each other. In this way, it may be beneficial for the connecting member to easily and conveniently fit the first connecting hole, the second connecting hole, and the third connecting hole.

In some embodiments, the connecting member penetrates the first connecting hole, the second connecting hole, and the third connecting hole. In this way, it may be helpful for the connecting member to sufficiently and securely fit the first connecting hole, the second connecting hole, and the third connecting hole.

In some embodiments, the adapter includes a first positioning portion, the appliance main body includes a second positioning portion fitting the first positioning portion, and the first positioning portion and the third connecting hole are arranged at an interval. In this way, it may be beneficial to position the adapter and the appliance main body by fitting the first positioning portion with the second positioning portion, to facilitate fitting of the connecting member with the first connecting hole, the second connecting hole, and the third connecting hole.

In some embodiments, the connecting member passes through the first connecting hole and the second connecting hole and forms a fitted connection with the third connecting hole, to fixedly connect the attachment member to the appliance main body. In this way, it may be helpful to enhance the assembly connection strength at the assembly connection between the attachment member and the appliance main body by using the adapter when requirements on materials, constructions, thicknesses, and the like of the attachment member and the appliance main body are not high and/or design changes of the attachment member and the appliance main body are not great.

In some embodiments, the adapter includes a sheet metal member. In this way, it may be beneficial for the adapter to enhance the assembly connection strength at the assembly connection between the attachment member and the appliance main body.

In some embodiments, the first positioning portion is in a concave-convex fit with the second positioning portion. In this way, it may be helpful for the first positioning portion to easily and conveniently fit the second positioning portion.

In some embodiments, the first positioning portion is a protrusion, and the second positioning portion is a hole. In this way, it may be beneficial for the first positioning portion to easily and conveniently fit the second positioning portion.

In some embodiments, the third connecting hole is a threaded hole, the connecting member is a screw, and the connecting member and the third connecting hole form a threaded fitting connection. In this way, it may be helpful for the connecting member to be securely connected to the third connecting hole.

In some embodiments, the connecting member is a self-tapping screw, and the connecting member and the third connecting hole form a threaded fitting connection. In this way, it may be beneficial for the connection between the connecting member and the third connecting hole to be secure and cost-effective.

In some embodiments, the appliance main body has a connecting portion defining the second connecting hole, and the adapter includes a first portion and a second portion that respectively clamp the connecting portion from two opposite sides. In this way, it may be helpful to position the appliance main body and the adapter by using the first portion and the second portion.

In some embodiments, the connecting portion has an edge, and the adapter is capable of clamping the connecting portion from the edge. In this way, it may be beneficial to position the appliance main body and the adapter from the edge.

In some embodiments, the third connecting hole and the first positioning portion are respectively provided on the first portion and the second portion. In this way, it may be helpful for the third connecting hole and the first positioning portion to respectively position the appliance main body and the adapter from the two opposite sides.

In some embodiments, the first portion and the second portion each have a substantially L-shaped cross section. In this way, it may be beneficial for the first portion and the second portion to respectively clamp the connecting portion from the two opposite sides.

In some embodiments, the adapter includes a main body portion, and the first portion and the second portion respectively extend from different sides of the main body portion in a staggered manner. In this way, it may be helpful for the adapter to have high strength and be easy and convenient to process while the first portion and the second portion respectively clamp the connecting portion from the two opposite sides.

In some embodiments, the adapter includes a self-clinching nut defining the third connecting hole. In this way, it may be beneficial for the connecting member to be securely connected to the third connecting hole.

In some embodiments, a protrusion direction of the self-clinching nut is the same as a protrusion direction of the first positioning portion. In this way, it may be helpful for the adapter to be easily and conveniently processed.

In some embodiments, the first portion is bent and extended from the main body portion, and is partially parallel to the main body portion. In this way, it may be beneficial for the first portion to be easily and conveniently processed.

In some embodiments, the main body portion and the second portion clamp the edge. In this way, it may be helpful to position the adapter and the appliance main body by using the main body portion, the second portion, and the edge.

In some embodiments, the second portion is bent and extended from the main body portion, and is partially parallel to the main body portion. In this way, it may be beneficial for the main body portion and the second portion to clamp the edge.

Another aspect of the embodiments of this application relates to an assembly method for the household appliance according to this application, including the following steps: aligning the second connecting hole with the third connecting hole; and rotating the adapter so that the first positioning portion fits the second positioning portion. In this way, it may be helpful to position the second connecting hole and the third connecting hole by fitting the first positioning portion with the second positioning portion, and a rotation operation is easy and convenient, without an additional process to implement universality of the adapter.

In some embodiments, in the assembly method, an angle for rotating the adapter is 90 degrees. In this way, it may be beneficial for the first positioning portion to easily and conveniently fit the second positioning portion.

In some embodiments, the adapter includes a third positioning portion, and the appliance main body includes a fourth positioning portion fitting the third positioning portion. In this way, it may be helpful to position the adapter and the appliance main body by using the third positioning portion and the fourth positioning portion.

In some embodiments, the adapter includes a fifth positioning portion, and the appliance main body includes a sixth positioning portion fitting the fifth positioning portion. In this way, it may be beneficial to position the adapter and the appliance main body by fitting the fifth positioning portion with the sixth positioning portion.

In some embodiments, the third positioning portion and the fourth positioning portion are movable relative to each other during assembly. In this way, it may be helpful for the third positioning portion and the fourth positioning portion to be easily and conveniently positioned relative to each other.

In some embodiments, the fourth positioning portion allows for movement of the third positioning portion in the fourth positioning portion. In this way, it may be beneficial for the adapter and the appliance main body to be positioned relative to each other by using the third positioning portion and the fourth positioning portion in a process in which the adapter is moved relative to the appliance main body.

In some embodiments, the fourth positioning portion is a hole, and the third positioning portion is a bend that is capable of extending into the fourth positioning portion and is capable of abutting on an edge of the fourth positioning portion. In this way, it may be helpful for the third positioning portion and the fourth positioning portion to be easily, conveniently, and reliably positioned.

In some embodiments, the fifth positioning portion is adjacent to the first positioning portion, and the sixth positioning portion and the second positioning portion are holes in communication with each other. In this way, it may be beneficial to position the first positioning portion and the second positioning portion by using the fifth positioning portion and the sixth positioning portion.

In some embodiments, the fifth positioning portion and the third positioning portion are located on different sides of the adapter. In this way, it may be helpful to position the adapter and the appliance main body from different sides of the adapter.

In some embodiments, the fifth positioning portion and the sixth positioning portion are movable relative to each other during assembly. In this way, it may be beneficial for the fifth positioning portion and the sixth positioning portion to be easily and conveniently positioned relative to each other.

In some embodiments, the sixth positioning portion allows for movement of the fifth positioning portion in the sixth positioning portion. In this way, it may be helpful for the adapter and the appliance main body to be positioned relative to each other by using the fifth positioning portion and the sixth positioning portion in a process in which the adapter is moved relative to the appliance main body.

In some embodiments, the sixth positioning portion is a hole, and the fifth positioning portion is a bend that is capable of extending into the sixth positioning portion and is capable of abutting on an edge of the sixth positioning portion. In this way, it may be beneficial for the fifth positioning portion and the sixth positioning portion to be easily, conveniently, and reliably positioned.

In some embodiments, a bending direction of the third positioning portion is different from a bending direction of the fifth positioning portion. In this way, it can be helpful to position the adapter and the appliance main body from different directions.

Another aspect of the embodiments of this application relates to an assembly method for the household appliance according to this application, including the following steps: positioning the third positioning portion and the fourth positioning portion and/or the fifth positioning portion and the sixth positioning portion at a first positioning position; and sliding the adapter until the third positioning portion and the fourth positioning portion and/or the fifth positioning portion and the sixth positioning portion reach a second positioning position. In this way, it may be beneficial for the adapter and the appliance main body to be easily and conveniently assembled. In addition, a sliding operation is easy and convenient, a connection between the connecting member and the appliance main body is implemented without an additional process, and universality of the adapter can be implemented on left and right sides of the appliance main body, thereby reducing a cost of a part and complexity.

In some embodiments, at the second positioning position, the first positioning portion fits the second positioning portion. In this way, it may be helpful to position the adapter and the appliance main body by fitting the first positioning portion with the second positioning portion.

In some embodiments, the household appliance is a laundry treatment apparatus, the attachment member is a front plate, and the appliance main body is a case body. In this way, the laundry treatment apparatus can have a strong structure and low operating noise, user experience can be good, and the like. For example, in the embodiments of this application, the connecting member fits the first connecting hole, the second connecting hole, and the third connecting hole, to fixedly connect the front plate to the case body. By enhancing assembly connection strength at an assembly connection between the front plate and the case body by using the adapter, it may be beneficial to resolve a problem that it is difficult for strength of the case body and/or the front plate to ensure the assembly connection strength at the assembly connection, so that the structure of the laundry treatment apparatus is strong, and the assembly connection between the front plate and the case body is not easy to be loosened due to a transport condition such as a drop and/or shake during logistics transportation. It can be avoided that the laundry treatment apparatus generates related noise during operation, and the user experience of the laundry treatment apparatus is good. Moreover, the assembly connection between the front plate and the case body is easy and convenient, and excessive design changes do not need to be made to the case body and/or the front plate. As a whole, a process of the laundry treatment apparatus is easy, convenient to assemble, a cost is low, and the like.

If a technical condition permits, technical features and feature combinations of the embodiments described in this application may also exist alone or in combination in other manners that are not described. Other embodiments that can be obtained by a person skilled in the art based on the technical features and the feature combinations of the embodiments described in this application without creative efforts and that correspond to existing manners in which the technical features or the feature combinations are not described in this application shall be considered to be included and disclosed in this application.

This application is further described below with reference to the accompanying drawings. Same or similar reference signs may be used in the accompanying drawings to refer to same or similar elements, components, shapes, configurations, features, steps, and the like in different embodiments, or descriptions of same or similar elements, components, shapes, configurations, features, steps, effects, and the like in the other embodiments and/or in the related art may be omitted.

### BRIEF DESCRIPTION OF THE DRAWINGS

- FIG. 1: is a schematic diagram of a partial structure of a household appliance related in an aspect according to an embodiment of this application;
- FIG. 2: is a schematic diagram of a partial structure of a household appliance according to some other embodiments of this application;
- FIG. 3: is a schematic perspective view of an adapter of the household appliance in FIG. 1;
- FIG. 4: is a schematic diagram of a partial structure of the household appliance in FIG. 2 from another perspective;
- FIG. 5: is a schematic perspective view of an adapter of the household appliance in FIG. 4;
- FIG. 6: is a schematic diagram of a partial structure of the household appliance in FIG. 1 from another perspective;
- FIG. 7: is a schematic diagram of a partial structure in a step of an assembly process of the household appliance in FIG. 6;
- FIG. 8: is a schematic flowchart of an assembly method for the household appliance in FIG. 7;
- FIG. 9: is a schematic diagram of a partial structure of the household appliance in FIG. 7 from another perspective;
- FIG. 10: is a schematic diagram of a partial structure of the household appliance in FIG. 4 from another perspective;
- FIG. 11: is a schematic diagram of a partial structure of the household appliance in FIG. 10 from another perspective;
- FIG. 12: is a schematic flowchart of an assembly method for the household appliance in FIG. 11;
- FIG. 13: is a schematic main view of the household appliance in FIG. 1 or FIG. 2; and
- FIG. 14: is a schematic partial enlarged view in a circle C in FIG. 13.

### DETAILED DESCRIPTION

Unless otherwise illustrated, all terms (including, but not limited to, technical terms and scientific terms) used to disclose the present invention have the same meaning as that commonly understood by a person of ordinary skill in the art to which the present invention belongs. The following descriptions are mainly for a purpose of demonstrating specific implementations, and are not intended to improperly limit the protection scope of the present invention.

Unless otherwise specifically illustrated, "in some embodiments" and similar terms in this application represent that at least one embodiment of this application includes a technical feature and a technical solution described after "in some embodiments" and the similar terms. In other words, while an embodiment includes a technical feature and a technical solution, one or more of other embodiments may include the technical feature and the technical solution, or may not include the technical feature and the technical solution.

Unless otherwise specifically illustrated, in this application, "and/or" and similar terms represent that there is at least one technical feature and technical solution listed before and after "and/or" and the similar terms. In other words, only one technical feature and technical solution listed before "and/or" and the similar terms may exist, only one technical feature and technical solution listed after "and/or" and the similar terms may exist, or any combination of two or more of technical features and technical solutions that are listed before and after "and/or" and the similar terms may exist. For example, "A and/or B" includes three parallel technical features or technical solutions: A, B, and A + B. For another example, a technical feature or a technical solution of "A; and/or B; and/or C; and/or D" or "A; B; C; and/or D" may include any one of A, B, C, and D, or may include any or all of combinations of A, B, C, and D, that is, may include a combination of any two or any three of A, B, C, and D, or may include a combination of A, B, C, and D.

Unless otherwise specifically illustrated, "have", "include", "comprise", and similar terms in this application are inclusive or open-ended, and do not exclude additional and unmentioned elements, components, shapes, configurations, features, steps, or the like.

Unless otherwise specifically illustrated, for meanings of terms such as "front", "rear", "side", "top", "bottom", "outer", "inner", "lower", and "upper" in this specification, refer to an orientation and a relationship in the accompanying drawings, or refer to an orientation and a relationship in use of a household appliance, and are not intended to unnecessarily limit the protection scope. For example, in contrast, during use, an orientation that is close to a user is "front", an orientation that is away from a user is "rear", an orientation that is close to ground on which a user is standing is "lower", an orientation that is away from ground on which a user is standing is "upper", and the like.

Unless otherwise specifically illustrated, terms such as "first" and "second" in this specification are not intended to represent importance, a priority, a time sequence, and the like, are only used to help distinguish between elements, components, shapes, constructions, directions, and the like modified by the terms, and should not be understood as an unnecessary limitation on the protection scope.

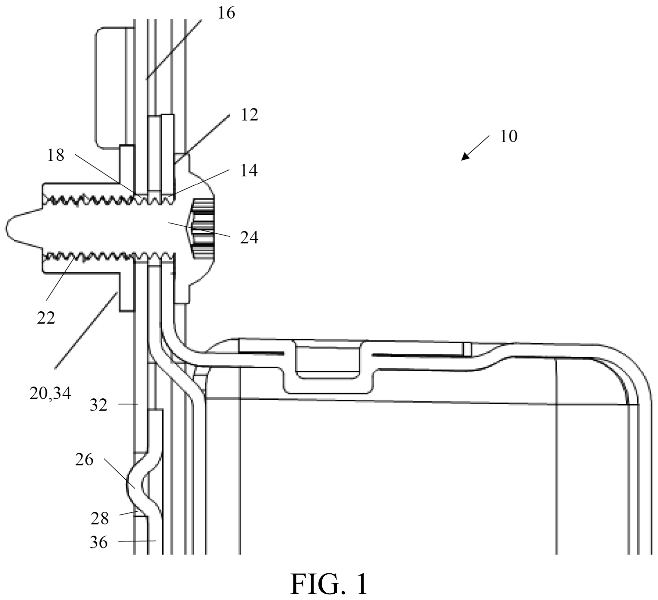

FIG. 1 is a schematic diagram of a partial structure of a household appliance related in an aspect according to an embodiment of this application.

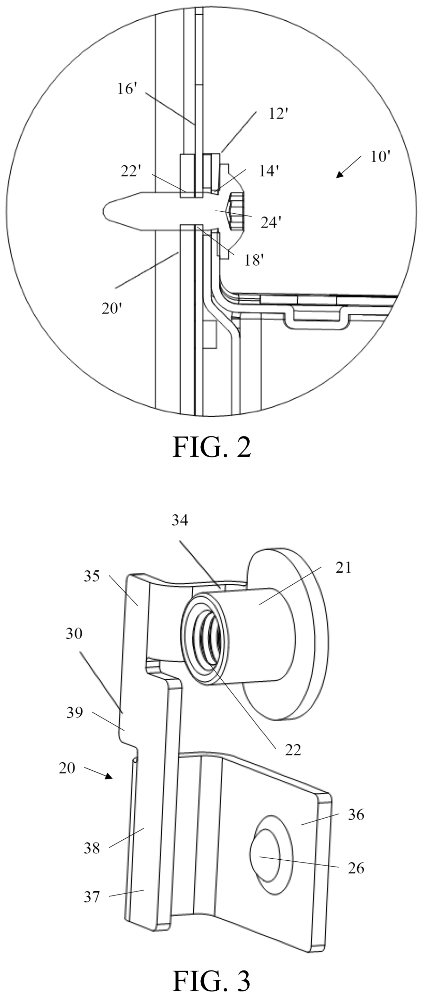

FIG. 2 is a schematic diagram of a partial structure of a household appliance according to some other embodiments of this application. Refer to FIG. 1 and FIG. 2. An aspect of the embodiments of this application relates to a household appliance 10, 10'. The household appliance 10, 10' includes an attachment member 12, 12' having a first connecting hole 14, 14'. The attachment member 12, 12' may include a plate construction. The first connecting hole 14, 14' may penetrate front and rear surfaces of the attachment member 12, 12'. The attachment member 12, 12' may be a component of the household appliance 10, 10' that plays a secondary functional role such as decoration and packaging.

The household appliance 10, 10' includes an appliance main body 16, 16' that includes a second connecting hole 18, 18' corresponding to the first connecting hole 14, 14'. The appliance main body 16, 16' may be a component of the household appliance 10, 10' that plays a primary functional role. The appliance main body 16, 16' may be at least partially located behind the attachment member 12, 12'. The first connecting hole 14, 14' may be aligned with the second connecting hole 18, 18' in a front-rear direction. The first connecting hole 14, 14' and the second connecting hole 18, 18' may have a common center line in the front-rear direction.

The household appliance 10, 10' includes an adapter 20, 20' that has a third connecting hole 22, 22' corresponding to the first connecting hole 14, 14' and the second connecting hole 18, 18'. The adapter 20, 20' may be a component assisting in connecting the attachment member 12, 12' to the appliance main body 16, 16'. The adapter 20, 20' may be at least partially located behind the attachment member 12, 12' and the appliance main body 16, 16'. The third connecting hole 22, 22' may be aligned with the first connecting hole 14, 14' and the second connecting hole 18, 18' in the front-rear direction. The third connecting hole 22, 22', the first connecting hole 14, 14', and the second connecting hole 18, 18' may have a common center line in the front-rear direction.

The household appliance 10, 10' includes a connecting member 24, 24' fitting the first connecting hole 14, 14', the second connecting hole 18, 18', and the third connecting hole 22, 22', to fixedly connect the attachment member 12, 12' to the appliance main body 16, 16'. The connecting member 24, 24' may fit one or more of the first connecting hole 14, 14', the second connecting hole 18, 18', and the third connecting hole 22, 22'. The connecting member 24, 24' may be connected to the adapter 20, 20'.

According to the embodiments of the present invention, the household appliance 10, 10' can have a strong structure and low operating noise, user experience can be good, and the like. For example, in the embodiments of this application, the connecting member 24, 24' fits the first connecting hole 14, 14', the second connecting hole 18, 18', and the third connecting hole 22, 22', to fixedly connect the attachment member 12, 12' to the appliance main body 16, 16'. By enhancing assembly connection strength at an assembly connection between the attachment member 12, 12' and the appliance main body 16, 16' by using the adapter 20, 20', it may be beneficial to resolve a problem that it is difficult for a thickness, a material, strength, and the like of the appliance main body and/or the attachment member to ensure the assembly connection strength at the assembly connection, so that the structure of the household appliance 10, 10' is strong, and the assembly connection between the attachment member 12, 12' and the appliance main body 16, 16' is not easy to be loosened due to a transport condition such as a drop and/or shake during logistics transportation. It can be avoided that the household appliance 10, 10' generates related noise during operation, and the user experience of the household appliance 10, 10' is good. Moreover, the assembly connection between the attachment member 12, 12' and the appliance main body 16, 16' is easy and convenient, and excessive design changes do not need to be made to the appliance main body and/or the attachment member. As a whole, a process of the household appliance 10, 10' is easy, convenient to assemble, a cost is low, and the like.

In some embodiments, the first connecting hole 14, 14', the second connecting hole 18, 18', and the third connecting hole 22, 22' are sequentially arranged in the front-rear direction. In this way, it may be helpful for the adapter 20, 20' to enhance the assembly connection between the attachment member 12, 12' and the appliance main body 16, 16' on a rear side that does not easily affect an appearance of the household appliance 10, 10'. The first connecting hole 14, 14' may be located in front of the second connecting hole 18, 18'. The third connecting hole 22, 22' may be located behind the first connecting hole 14, 14' and the second connecting hole 18, 18'.

In some embodiments, the first connecting hole 14, 14', the second connecting hole 18, 18', and the third connecting hole 22, 22' are in communication with each other. In this way, it may be beneficial for the connecting member 24, 24' to easily and conveniently fit the first connecting hole 14, 14', the second connecting hole 18, 18', and the third connecting hole 22, 22'.

In some embodiments, the connecting member 24, 24' penetrates the first connecting hole 14, 14', the second connecting hole 18, 18', and the third connecting hole 22, 22'. In this way, it may be helpful for the connecting member 24, 24' to sufficiently and securely fit the first connecting hole 14, 14', the second connecting hole 18, 18', and the third connecting hole 22, 22'.

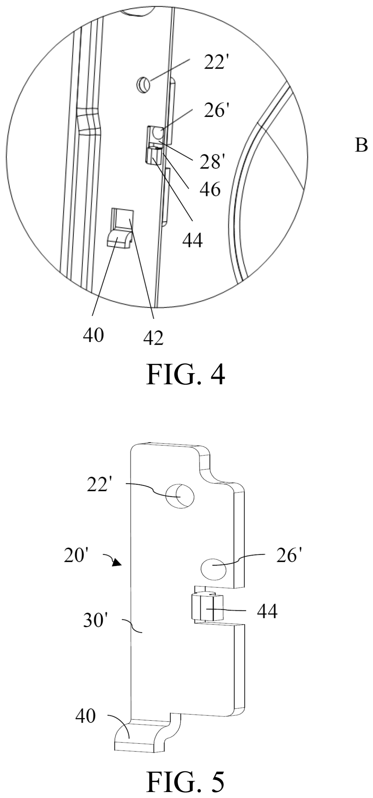

FIG. 3 is a schematic perspective view of the adapter of the household appliance in FIG. 1. FIG. 4 is a schematic diagram of a partial structure of the household appliance in FIG. 2 from another perspective. With reference to FIG. 3 and FIG. 4, in some embodiments, the adapter 20, 20' includes a first positioning portion 26, 26', the appliance main body 16, 16' includes a second positioning portion 28, 28' fitting the first positioning portion 26, 26', and the first positioning portion 26, 26' and the third connecting hole 22, 22' are arranged at an interval. In this way, it may be beneficial to position the adapter 20, 20' and the appliance main body 16, 16' by fitting the first positioning portion 26, 26' with the second positioning portion 28, 28', thereby facilitating fitting of the connecting member 24, 24' with the first connecting hole 14, 14', the second connecting hole 18, 18', and the third connecting hole 22, 22'.

In some embodiments, the connecting member 24, 24' passes through the first connecting hole 14, 14' and the second connecting hole 18, 18' and forms a fitted connection with the third connecting hole 22, 22', to fixedly connect the attachment member 12, 12' to the appliance main body 16, 16'. In this way, it may be helpful to enhance the assembly connection strength at the assembly connection between the attachment member 12, 12' and the appliance main body 16, 16' by using the adapter 20, 20' when requirements on materials, constructions, thicknesses, and the like of the attachment member 12, 12' and the appliance main body 16, 16' are not high and/or design changes of the attachment member 12, 12' and the appliance main body 16, 16' are not great.

FIG. 5 is a schematic perspective view of the adapter of the household appliance in FIG. 4. Refer to FIG. 5. In some embodiments, the adapter 20, 20' includes a sheet metal member 30, 30'. In this way, it may be beneficial for the adapter 20, 20' to enhance the assembly connection strength at the assembly connection between the attachment member 12, 12' and the appliance main body 16, 16'. The sheet metal member 30, 30' may be formed by stamping and bending from a metal sheet having a thickness in a range of 1 mm to 2 mm.

Unless otherwise specifically illustrated, a numerical range in the present invention includes all possible sub-ranges included in the range. For example, 1 mm to 2 mm may include 1 mm to 1.1 mm, 1 mm to 1.2 mm, 1 mm to 1.3 mm, 1 mm to 1.4 mm, 1 mm to 1.5 mm, ..., 1.5 mm to 2 mm, ..., 1.9 mm to 2 mm, and the like.

In some embodiments, the first positioning portion 26, 26' is in a concave-convex fit with the second positioning portion 28, 28'. In this way, it may be helpful for the first positioning portion 26, 26' to easily and conveniently fit the second positioning portion 28, 28'.

In some embodiments, the first positioning portion 26, 26' is a protrusion, and the second positioning portion 28, 28' is a hole. In this way, it may be beneficial for the first positioning portion 26, 26' to easily and conveniently fit the second positioning portion 28, 28'.

The adapters 20, 20' of different thicknesses, materials, and constructions may be selected with reference to different operating conditions and connection strength requirements, to provide a corresponding connecting force.

In some embodiments, the third connecting hole 22 is a threaded hole, the connecting member 24 is a screw, and the connecting member 24 and the third connecting hole 22 form a threaded fitting connection. In this way, it may be helpful for the connecting member 24 to be securely connected to the third connecting hole 22.

In some embodiments, the connecting member 24' is a self-tapping screw, and the connecting member 24' and the third connecting hole 22' form a threaded fitting connection. In this way, it may be beneficial for the connection between the connecting member 24' and the third connecting hole 22' to be secure and cost-effective.

The third connecting hole 22, 22' of the adapter 20, 20' and the connecting member 24, 24' may have sufficient threaded pairs to provide sufficient assembly connection strength at the assembly connection between the attachment member 12, 12' and the appliance main body 16, 16', so that the assembly connection strength at the assembly connection between the attachment member 12, 12' and the appliance main body 16, 16' is not limited by materials, thicknesses, strength, and the like of the attachment member 12, 12' and the appliance main body 16, 16', and the assembly connection strength at the assembly connection between the attachment member 12, 12' and the appliance main body 16, 16' can be effectively improved on the condition that design changes of the attachment member 12, 12' and the appliance main body 16, 16' are not great.

In some embodiments, the appliance main body 16 has a connecting portion 32 defining the second connecting hole 18, and the adapter 20 includes a first portion 34 and a second portion 36 that respectively clamp the connecting portion 32 from two opposite sides. In this way, it may be helpful to position the appliance main body 16 and the adapter 20 by using the first portion 34 and the second portion 36.

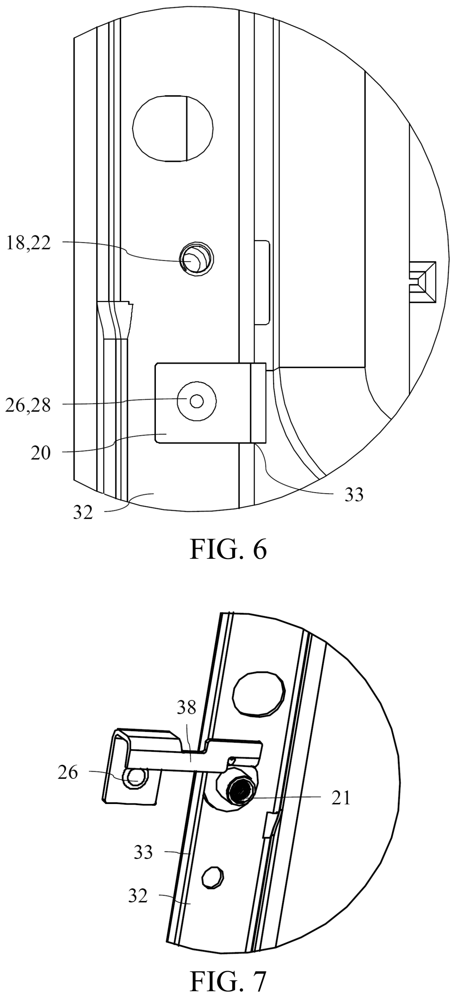

FIG. 6 is a schematic diagram of a partial structure of the household appliance in FIG. 1 from another perspective. With reference to FIG. 6, in some embodiments, the connecting portion 32 has an edge 33, and the adapter 20 can clamp the connecting portion 32 from the edge 33. In this way, it may be beneficial to position the appliance main body 16 and the adapter 20 from the edge 33.

In some embodiments, the third connecting hole 22 and the first positioning portion 26 are respectively provided on the first portion 34 and the second portion 36. In this way, it may be helpful for the third connecting hole 22 and the first positioning portion 26 to respectively position the appliance main body 16 and the adapter 20 from the two opposite sides.

In some embodiments, the first portion 34 and the second portion 36 each have a substantially L-shaped cross section.

In this way, it may be beneficial for the first portion 34 and the second portion 36 to respectively clamp the connecting portion 32 from the two opposite sides.

In some embodiments, the adapter 20 includes a main body portion 38, and the first portion 34 and the second portion 36 respectively extend from different sides of the main body portion 38 in a staggered manner. In this way, it may be helpful for the adapter 20 to have high strength and be easy and convenient to process while the first portion 34 and the second portion 36 respectively clamp the connecting portion 32 from the two opposite sides.

In some embodiments, the adapter 20 includes a self-clinching nut 21 defining the third connecting hole 22. In this way, it may be beneficial for the connecting member 24 to be securely connected to the third connecting hole 22.

In some embodiments, a protrusion direction of the self-clinching nut 21 is the same as a protrusion direction of the first positioning portion 26. In this way, it may be helpful for the adapter 20 to be easily and conveniently processed.

In some embodiments, the first portion 34 is bent and extended from the main body portion 38, and is partially parallel to the main body portion 38. In this way, it may be beneficial for the first portion 34 to be easily and conveniently processed.

In some embodiments, the main body portion 38 and the second portion 36 clamp the edge 33. In this way, it may be helpful to position the adapter 20 and the appliance main body 16 by using the main body portion 38, the second portion 36, and the edge 33.

In some embodiments, the second portion 36 is bent and extended from the main body portion 38, and is partially parallel to the main body portion 38. In this way, it may be beneficial for the main body portion 38 and the second portion 36 to clamp the edge 33.

The main body portion 38 may be substantially configured in an elongated plate form. The first portion 34 may be bent backward from a right side of an upper portion 35 of the main body portion 38, and then bent to the right for extension. The self-clinching nut 21 may protrude forward from an end of the first portion 34 that is away from the main body portion 38. The second portion 36 may be bent backward from a left side of a lower portion 37 of the main body portion 38, and then bent to the right for extension. The first positioning portion 26 may protrude forward from an end of the second portion 36 that is away from the main body portion 38. The main body portion 38 is connected to the upper portion 35 of the first portion 34 and the lower portion 37 of the second portion 36 respectively. A width of the upper portion and the lower portion in a left and right direction may be less than a width of a middle portion 39 between the upper portion and the lower portion in the left and right direction.

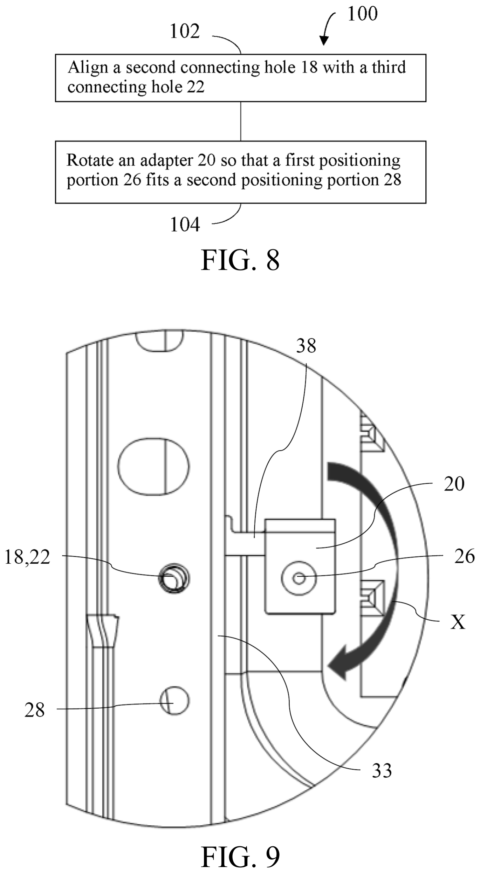

FIG. 7 is a schematic diagram of a partial structure in a step of an assembly process of the household appliance in FIG. 6. FIG. 8 is a schematic flowchart of an assembly method for the household appliance in FIG. 7. With reference to FIG. 7 and FIG. 8, another aspect of the embodiments of this application relates to an assembly method 100 for the household appliance 10 according to this application, including: step 102, aligning the second connecting hole 18 with the third connecting hole 22; and step 104, rotating the adapter 20 so that the first positioning portion 26 fits the second positioning portion 28. In this way, it may be helpful to position the second connecting hole 18 and the third connecting hole 22 by fitting the first positioning portion 26 with the second positioning portion 28, and the rotation operation is easy and convenient, without an additional process to implement universality of the adapter.

In step 102, an extension direction of the main body portion 38 may be substantially perpendicular to the edge 33, the self-clinching nut 21 may be stacked on the connecting portion 32 in a front-rear direction, and the first positioning portion 26 may not be stacked on the connecting portion 32, and is located outside the edge 33.

In some embodiments, in step 104, an angle for rotating the adapter 20 is 90 degrees. In this way, it may be beneficial for the first positioning portion 26 to easily and conveniently fit the second positioning portion 28.

Unless otherwise specifically illustrated, a value in the present invention includes a fluctuation within a particular range. For example, the value may fluctuate within a corresponding precision range. For example, 90 may include a value in a range of 1 × (1 + 5%), that is, a value in an interval from 85.5 to 94.5, such as 85.5, 85.6, 85.7, 85.8, 85.9, ..., 94.2, 94.3, 94.4, 94.5, and so on.

After step 104, the connecting member 24 may pass through the aligned first connecting hole 14 and second connecting hole 18 and form a fitted connection with the third connecting hole 22, to fixedly connect the attachment member 12 to the appliance main body 16.

FIG. 9 is a schematic diagram of a partial structure of the household appliance in FIG. 7 from another perspective. With reference to FIG. 9, the adapter 20 may be rotated in a direction of an arrow X, until the first positioning portion 26 reaches a position fitting the second positioning portion 28 in FIG. 6.

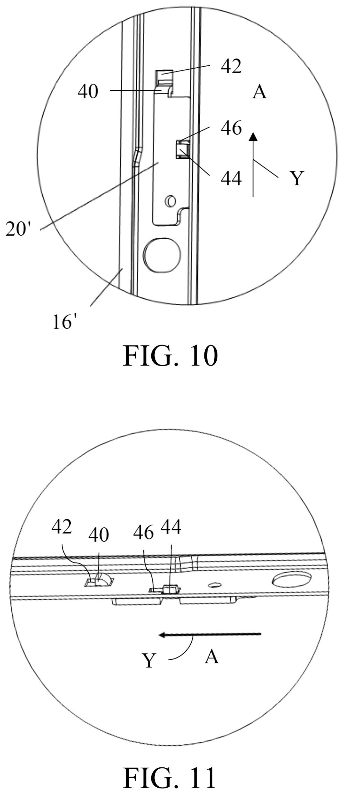

FIG. 10 is a schematic diagram of a partial structure of the household appliance in FIG. 4 from another perspective. With reference to FIG. 10, in some embodiments, the adapter 20' includes a third positioning portion 40, and the appliance main body 16' includes a fourth positioning portion 42 fitting the third positioning portion 40. In this way, it may be helpful to position the adapter 20' and the appliance main body 16' by using the third positioning portion 40 and the fourth positioning portion 42.

In some embodiments, the adapter 20' includes a fifth positioning portion 44, and the appliance main body 16' includes a sixth positioning portion 46 fitting the fifth positioning portion 44. In this way, it may be beneficial to position the adapter 20' and the appliance main body 16' by fitting the fifth positioning portion 44 with the sixth positioning portion 46.

In some embodiments, the third positioning portion 40 and the fourth positioning portion 42 are movable relative to each other during assembly. In this way, it may be helpful for the third positioning portion 40 and the fourth positioning portion 42 to be easily and conveniently positioned relative to each other.

In some embodiments, the fourth positioning portion 42 allows for movement of the third positioning portion 40 in the fourth positioning portion 42. In this way, it may be beneficial for the adapter 20' and the appliance main body 16' to be positioned relative to each other by using the third positioning portion 40 and the fourth positioning portion 42 in a process in which the adapter 20' is moved relative to the appliance main body 16'.

FIG. 11 is a schematic diagram of a partial structure of the household appliance in FIG. 10 from another perspective. With reference to FIG. 11, in some embodiments, the fourth positioning portion 42 is a hole, and the third positioning portion 40 is a bend that is capable of extending into the fourth positioning portion 42 and is capable of abutting on an edge of the fourth positioning portion 42. In this way, it may be helpful for the third positioning portion 40 and the fourth positioning portion 42 to be easily, conveniently, and reliably positioned.

In some embodiments, the fifth positioning portion 44 is adjacent to the first positioning portion 26', and the sixth positioning portion 46 and the second positioning portion 28' are holes in communication with each other. In this way, it may be beneficial to position the first positioning portion 26' and the second positioning portion 28' by using the fifth positioning portion 44 and the sixth positioning portion 46.

In some embodiments, the fifth positioning portion 44 and the third positioning portion 40 are located on different sides of the adapter 20'. In this way, it may be helpful to position the adapter 20' and the appliance main body 16' from different sides of the adapter 20'. The fifth positioning portion 44 and the third positioning portion 40 may be located on two adjacent sides of the adapter 20'. The third positioning portion 40 may be located on a side away from the third connecting hole 22'.

In some embodiments, the fifth positioning portion 44 and the sixth positioning portion 46 are movable relative to each other during assembly. In this way, it may be beneficial for the fifth positioning portion 44 and the sixth positioning portion 46 to be easily and conveniently positioned relative to each other.

In some embodiments, the sixth positioning portion 46 allows for movement of the fifth positioning portion 44 in the sixth positioning portion 46. In this way, it may be helpful for the adapter 20' and the appliance main body 16' to be positioned relative to each other by using the fifth positioning portion 44 and the sixth positioning portion 46 in a process in which the adapter 20' is moved relative to the appliance main body 16'.

In some embodiments, the sixth positioning portion 46 is a hole, and the fifth positioning portion 44 is a bend that is capable of extending into the sixth positioning portion 46 and is capable of abutting on an edge of the sixth positioning portion 46. In this way, it may be beneficial for the fifth positioning portion 44 and the sixth positioning portion 46 to be easily, conveniently, and reliably positioned.

In some embodiments, a bending direction of the third positioning portion 40 is different from a bending direction of the fifth positioning portion 44. In this way, it may be helpful to position the adapter 20' and the appliance main body 16' from different directions. The bending direction of the third positioning portion 40 may be perpendicular to the bending direction of the fifth positioning portion 44. The third positioning portion 40 and the fifth positioning portion 44 may separately extend outward after being bent forward from edges at which the third positioning portion 40 and the fifth positioning portion 44 are located. The adapter 20' may be substantially a rectangular half-slice construction. The third positioning portion 40 may be bent from an edge of a portion of the adapter 20' where a short side is close to a long side. The fifth positioning portion 44 may be bent after being cut inward from a middle edge of another long side of the adapter 20' that is away from the third positioning portion 40.

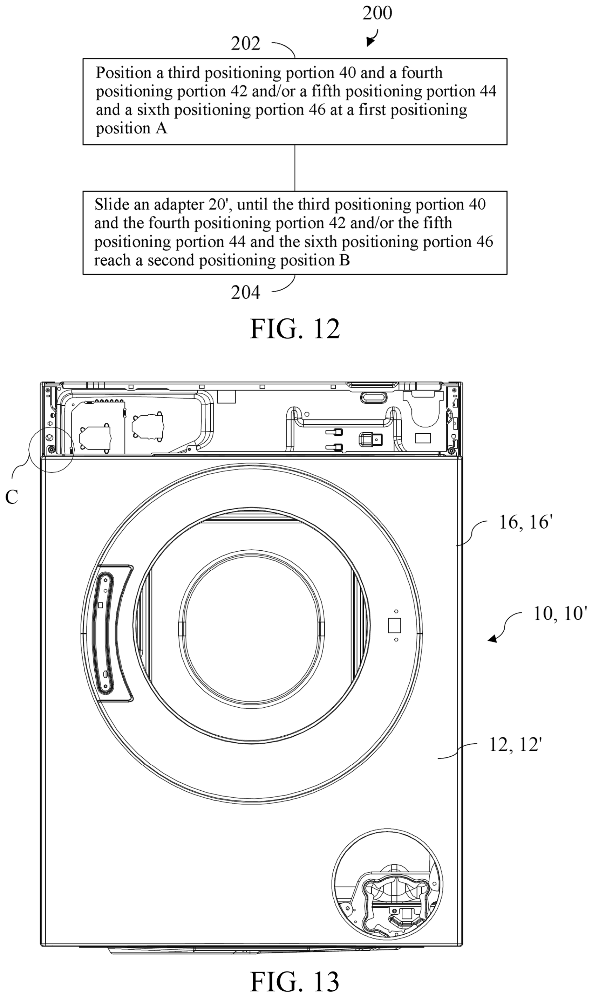

FIG. 12 is a schematic flowchart of an assembly method for the household appliance in FIG. 11. With reference to FIG. 12, another aspect of the embodiments of this application relates to an assembly method 200 for the household appliance 10' according to this application, including: step 202, positioning the third positioning portion 40 and the fourth positioning portion 42 and/or the fifth positioning portion 44 and the sixth positioning portion 46 at a first positioning position A; and step 204, sliding the adapter 20', until the third positioning portion 40 and the fourth positioning portion 42 and/or the fifth positioning portion 44 and the sixth positioning portion 46 reach a second positioning position B. In this way, it may be beneficial for the adapter 20' and the appliance main body 16' to be easily and conveniently assembled. In addition, the sliding operation is easy and convenient, a connection between the connecting member 24' and the appliance main body 16' is implemented without an additional process, and universality of the adapter 20' can be implemented on left and right sides of the appliance main body 16', thereby reducing a cost of a part and complexity.

As shown in FIG. 10 and FIG. 11, in step 202, the third positioning portion 40 may extend into the fourth positioning portion 42 and abut on a side edge of the fourth positioning portion 42, to be positioned at the first positioning position A, and/or the fifth positioning portion 44 may extend into the sixth positioning portion 46 and abut on a side edge of the sixth positioning portion 46, to be positioned at the first positioning position A.

In step 204, in a process of sliding the adapter 20', the third positioning portion 40 and the fifth positioning portion 44 may be respectively moved between two opposite side edges of the fourth positioning portion 42 and the sixth positioning portion 46. The adapter 20' can be slid from the first positioning position A in a direction indicated by an arrow Y, until the third positioning portion 40 and the fourth positioning portion 42 and/or the fifth positioning portion 44 and the sixth positioning portion 46 reach the second positioning position B shown in FIG. 4. In this case, the third positioning portion 40 abuts on a side edge opposite to a side edge at which the first positioning position A of the fourth positioning portion 42 is located, and/or the fifth positioning portion 44 abuts on a side edge opposite to a side edge at which the first positioning position A of the sixth positioning portion 46 is located, and the second connecting hole 18' is aligned with the third connecting hole 22'. Subsequently, the connecting member 24' may pass through the first connecting hole 14' and the second connecting hole 18' sequentially and form a fitted connection with the third connecting hole 22', to fixedly connect the attachment member 12' to the appliance main body 16'.

In some embodiments, at the second positioning position B, the first positioning portion 26' fits the second positioning portion 28'. In this way, it may be helpful to position the adapter 20' and the appliance main body 16' by fitting the first positioning portion 26' with the second positioning portion 28'.

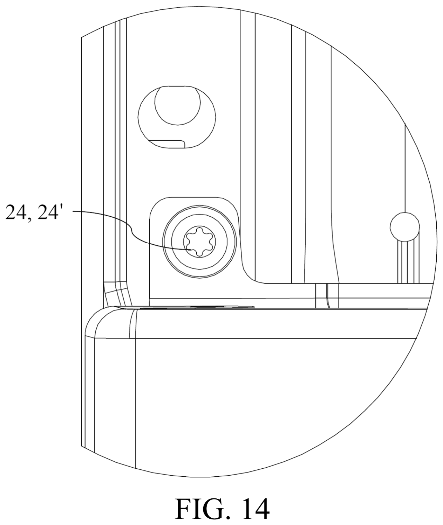

FIG. 13 is a schematic main view of the household appliance in FIG. 1 or FIG. 2. FIG. 14 is a schematic enlarged view of a partial structure in a circle C in FIG. 13. With reference to FIG. 13 and FIG. 14, in some embodiments, the household appliance 10, 10' is a laundry treatment apparatus, the attachment member 12, 12' is a front plate, and the appliance main body 16, 16' is a case body. In this way, the laundry treatment apparatus can have a strong structure and low operating noise, user experience can be good, and the like. For example, in the embodiments of this application, the connecting member 24, 24' fits the first connecting hole 14, 14', the second connecting hole 18, 18', and the third connecting hole 22, 22', to fixedly connect the front plate 12, 12' to the case body 16, 16'. By enhancing assembly connection strength at an assembly connection between the front plate 12, 12' and the case body 16, 16' by using the adapter 20, 20', it may be beneficial to resolve a problem that it is difficult for strength of the case body and/or the front plate to ensure the assembly connection strength at the assembly connection, so that the structure of the laundry treatment apparatus is strong, and the assembly connection between the front plate and the case body is not easy to be loosened due to a transport condition such as a drop and/or shake during logistics transportation. It can be avoided that the laundry treatment apparatus generates related noise during operation, and the user experience of the laundry treatment apparatus is good. Moreover, the assembly connection between the front plate and the case body is easy and convenient, and excessive design changes do not need to be made to the case body and/or the front plate. As a whole, a process of the laundry treatment apparatus is easy, convenient to assemble, a cost is low, and the like.

The laundry treatment apparatus may be a washing machine, a clothes dryer, and a washer-dryer combo. The front plate may include a decorative plate. The case body may contain and process clothes.

The specific implementations described above and shown in the accompanying drawings are only some specific implementations used for describing features and effects of the present invention, are not all the implementations of the present invention, and are not intended to constitute an unnecessary limitation on the patent protection scope of the present invention. A person of ordinary skill in the art may further obtain other implementations according to the specific implementations without creative efforts. The patent protection scope of the present invention is subject to the appended claims, and the specification and the accompanying drawings are used to explain the content of the claims.

## Claims

1. A household appliance (10, 10'), comprising:
an attachment member (12, 12'), having a first connecting hole (14, 14');
an appliance main body (16, 16'), comprising a second connecting hole (18, 18') corresponding to the first connecting hole (14, 14');
an adapter (20, 20'), having a third connecting hole (22, 22') corresponding to the first connecting hole (14, 14') and the second connecting hole (18, 18'); and
a connecting member (24, 24'), fitting the first connecting hole (14, 14'), the second connecting hole (18, 18'), and the third connecting hole (22, 22'), to fixedly connect the attachment member (12, 12') to the appliance main body (16, 16').

2. The household appliance (10, 10') according to claim 1, **characterized in that**:
the first connecting hole (14, 14'), the second connecting hole (18, 18'), and the third connecting hole (22, 22') are sequentially arranged in a front-rear direction; and/or
the first connecting hole (14, 14'), the second connecting hole (18, 18'), and the third connecting hole (22, 22') are in communication with each other; and/or the connecting member (24, 24') penetrates the first connecting hole (14, 14'),
the second connecting hole (18, 18'), and the third connecting hole (22, 22'); and/or
the adapter (20, 20') comprises a first positioning portion (26, 26'), the appliance main body (16, 16') comprises a second positioning portion (28, 28') fitting the first positioning portion (26, 26'), and the first positioning portion (26, 26') and the third connecting hole (22, 22') are arranged at an interval; and/or
the connecting member (24, 24') passes through the first connecting hole (14, 14') and the second connecting hole (18, 18') and forms a fitted connection with the third connecting hole (22, 22'), to fixedly connect the attachment member (12, 12') to the appliance main body (16, 16'); and/or
the adapter (20, 20') comprises a sheet metal member (30, 30').

3. The household appliance (10, 10') according to claim 2, **characterized in that**:
the first positioning portion (26, 26') is in a concave-convex fit with the second positioning portion (28, 28'); and/or
the first positioning portion (26, 26') is a protrusion, and the second positioning portion (28, 28') is a hole; and/or
the third connecting hole (22) is a threaded hole, the connecting member (24) is a screw, and the connecting member (24) and the third connecting hole (22) form a threaded fitting connection; and/or
the connecting member (24') is a self-tapping screw, and the connecting member (24') and the third connecting hole (22') form a threaded fitting connection.

4. The household appliance (10) according to claim 2 or 3, **characterized in that**:
the appliance main body (16) has a connecting portion (32) defining the second connecting hole (18), and the adapter (20) comprises a first portion (34) and a second portion (36) that respectively clamp the connecting portion (32) from two opposite sides.

5. The household appliance (10) according to claim 4, **characterized in that**:
the connecting portion (32) has an edge (33), and the adapter (20) is capable of clamping the connecting portion (32) from the edge (33); and/or
the third connecting hole (22) and the first positioning portion (26) are respectively arranged on the first portion (34) and the second portion (36); and/or
the first portion (34) and the second portion (36) each have a substantially L-shaped cross section; and/or
the adapter (20) comprises a main body portion (38), and the first portion (34) and the second portion (36) respectively extend from different sides of the main body portion (38) in a staggered manner; and/or
the adapter (20) comprises a self-clinching nut (21) defining the third connecting hole (22).

6. The household appliance (10) according to claim 5, **characterized in that**:
a protrusion direction of the self-clinching nut (21) is the same as a protrusion direction of the first positioning portion (26); and/or
the first portion (34) is bent and extended from the main body portion (38), and is partially parallel to the main body portion (38); and/or
the main body portion (38) and the second portion (36) clamp the edge (33); and/or
the second portion (36) is bent and extended from the main body portion (38), and is partially parallel to the main body portion (38).

7. An assembly method (100) for the household appliance (10) according to any one of claims 2 to 6, comprising:
step (102), aligning the second connecting hole (18) with the third connecting hole (22); and
step (104), rotating the adapter (20) for the first positioning portion (26) to fit the second positioning portion (28).

8. The assembly method (100) for the household appliance (10) according to claim 7, **characterized in that** in step (104), an angle for rotating the adapter (20) is 90 degrees.

9. The household appliance (10') according to claim 2 or 3, **characterized in that**:
the adapter (20') comprises a third positioning portion (40), and the appliance main body (16') comprises a fourth positioning portion (42) fitting the third positioning portion (40); and/or
the adapter (20') comprises a fifth positioning portion (44), and the appliance main body (16') comprises a sixth positioning portion (46) fitting the fifth positioning portion (44).

10. The household appliance (10') according to claim 9, **characterized in that**:
the third positioning portion (40) and the fourth positioning portion (42) are movable relative to each other during assembly; and/or
the fourth positioning portion (42) allows for movement of the third positioning portion (40) in the fourth positioning portion (42); and/or
the fourth positioning portion (42) is a hole, and the third positioning portion (40) is a bend that is capable of extending into the fourth positioning portion (42) and is capable of abutting on an edge of the fourth positioning portion (42); and/or
the fifth positioning portion (44) is adjacent to the first positioning portion (26'),
and the sixth positioning portion (46) and the second positioning portion (28') are holes in communication with each other; and/or
the fifth positioning portion (44) and the third positioning portion (40) are located on different sides of the adapter (20'); and/or
the fifth positioning portion (44) and the sixth positioning portion (46) are movable relative to each other during assembly; and/or
the sixth positioning portion (46) allows for movement of the fifth positioning portion (44) in the sixth positioning portion (46); and/or
the sixth positioning portion (46) is a hole, and the fifth positioning portion (44) is a bend that is capable of extending into the sixth positioning portion (46) and
is capable of abutting on an edge of the sixth positioning portion (46).

11. The household appliance (10') according to claim 10, **characterized in that**:
a bending direction of the third positioning portion (40) is different from a bending direction of the fifth positioning portion (44).

12. An assembly method (200) for the household appliance (10') according to any one of claims 9 to 11, comprising:
step (202), positioning the third positioning portion (40) and the fourth positioning portion (42) and/or the fifth positioning portion (44) and the sixth positioning portion (46) at a first positioning position (A); and
step (204), sliding the adapter (20') until the third positioning portion (40) and the fourth positioning portion (42) and/or the fifth positioning portion (44) and the sixth positioning portion (46) reach a second positioning position (B).

13. The assembly method (200) for the household appliance (10') according to claim 12, **characterized in that**: at the second positioning position (B), the first positioning portion (26') fits the second positioning portion (28').

14. The household appliance (10, 10') according to any one of claims 1 to 6 and 9 to 11, **characterized in that**: the household appliance (10, 10') is a laundry treatment apparatus, the attachment member (12, 12') is a front plate, and the appliance main body (16, 16') is a case body.
